# FASCICULE DE BREVET EUROPEEN

(11) **EP 0 750 268 B1**
(45) Date de publication et mention de la délivrance du brevet: **19.01.2000**
(21) Numéro de dépôt: 96401358.5
(22) Date de dépôt: 20.06.1996
(51) Int. Cl.: G06G 7/60

(54) **Réseau de diffusion pseudo-axonique permettant de créer des champs récepteurs variables**
Neuronales Diffusionsnetz zur Erzeugung von variablen Empfangsfeldern
Neural diffusion network for creating variable receiving fields

(30) Priorité: 23.06.1995 FR 9507578
(43) Date de publication de la demande: 27.12.1996
(73) Titulaire: C.S.E.M. CENTRE SUISSE D'ELECTRONIQUE ET DE MICROTECHNIQUE SA, 2007 Neuchâtel (CH)
(72) Inventeur: Venier, Philippe, 2540 Grenchen (CH)
(74) Mandataire: Caron, Gérard

(56) Documents cités:
- EP-A- 0 517 097
- P. HEIM: "CMOS Analogue VLSI implementation of a Kohonen map" 1993 , TH SE NO 1174, COLE POLYTECHNIQUE F D RALE DE LAUSANNE , SUISSE XP000579978 * page 53 - page 66 *
- ELECTRONICS LETTERS, vol. 27, no. 3, 31 Janvier 1991, STEVENAGE GB, pages 275-277, XP000208281 HEIM ET AL.: "Generation of learning neighbourhood in Kohonen feature meps by means of simple nonlinear network"
- IEEE INTERNATIONAL SYMPOSIUM ON CIRCUITS AND SYSTEMS, PROCEEDINGS, VOL. 2 OF 3, 7 Juin 1988, ESPOO, FINLAND, pages 1217-1220, XP002014701 BERNARD ET AL.: "Design of a half-toning integrated circuit based on analog quadratic minimization by non linear multistage switched capacitor network"

## Description

La présente invention concerne les réseaux électroniques de diffusion permettant de créer des champs récepteurs ou projecteurs, selon un principe qui tente d'imiter ce qui se passe dans le système nerveux des êtres vivants. C'est pourquoi parfois, les spécialistes de ce domaine appellent ces réseaux "arbres pseudo-axoniques".

De tels réseaux servent à créer des systèmes dans lesquels chaque cellule d'un arbre axonique permet de communiquer avec un grand nombre de cellules sélectionnées d'un autre groupe (ou "couche"), le nombre de cellules de cette autre couche de cellules étant déterminé par la topologie même de cet arbre axonique.

Un domaine d'application de tels réseaux utilisant des arbres pseudo-neuronaux axoniques, est celui de la reconnaissance de caractères.

Un réseau de ce type a été décrit sur le plan essentiellement théorique dans une thèse soutenue en 1993 à l'Ecole Polytechnique Fédérale de Lausanne (EPFL, Suisse) par P; Heim, intitulée: "Nonlinear Diffusion Network For Neighbourhood Generation" (Réseau de diffusion non linéaire pour engendrer des signaux de voisinage).

Le réseau examiné dans ce document comporte des couches composées de cellules qui, dans chaque couche, sont latéralement connectées entre elles par l'intermédiaire d'éléments de liaison dits "RG" (pour résistance-conductance) ayant de préférence une caractéristique de conduction non linéaire, et qui sont typiquement des transistors.

Chaque cellule présente un noeud de connexion dans lequel peut être injecté un courant pouvant se propager latéralement dans la couche vers les cellules voisines à travers les éléments RG correspondants. Les cellules ainsi atteintes par cette impulsion de commande forment dans la couche une configuration de forme circulaire, appelée "bulle" par les spécialistes.

Ainsi, dans un système composé de plusieurs couches de cellules, chaque cellule d'une couche émettrice peut être connectée par son propre arbre axonique aux cellules d'une couche réceptrice et propager une information matérialisée à partir des courants injectés dans les cellules à travers les éléments de conduction.

L'étendue d'une bulle dans la couche (c'est-à-dire le nombre de cellules activées composant la bulle), dépend en premier lieu de l'intensité du courant injecté. Dans l'article précité, on propose des moyens pour faire diffuser le courant uniformément dans la couche afin d'obtenir une forme de la bulle qui soit essentiellement circulaire, quel que soit l'endroit dans le réseau où le courant est injecté.

L'invention a pour but de fournir un réseau de distribution du type "arbre pseudo-axonique neuronique" qui, en se basant sur les principes exposés dans le document précité de P.Heim, présente une structure simple et efficace, tout en présentant de meilleures performances, en particulier celle permettant d'engendrer des bulles de dimensions non-uniformes.

L'invention a donc pour objet un réseau pseudo-axonique de diffusion d'information comprenant une pluralité de cellules connectées entre elles pour la transmission de l'information par des éléments de liaison, de préférence à caractéristique de conduction non linéaire, chaque cellule comportant un noeud de connexion dont le potentiel est représentatif de l'état excité de ladite cellule et auquel est relié au moins un desdits éléments de liaison, ledit noeud de connexion de chaque cellule étant également inséré dans un circuit série comportant une source de courant et un élément consommateur de courant pour fixer ledit potentiel, ledit réseau étant caractérisé en ce que chaque cellule comporte également un élément interrupteur entre ladite source de courant et ledit noeud de connexion, chaque élément interrupteur pouvant être fermé sélectivement par des impulsions d'activation, ainsi qu'un comparateur pour comparer ledit potentiel du noeud de connexion à une tension de seuil, la sortie dudit comparateur formant la sortie de ladite cellule et délivrant une information de sortie représentative du taux d'excitation de cette cellule résultant d'activations d'une ou de plusieurs cellules quelconques dudit réseau.

Il résulte de ces caractéristiques que l'information élémentaire devant être traitée par la cellule, peut être une impulsion de commande ou d'activation qui en fermant l'élément interrupteur, provoque l'injection temporaire d'un courant dans le noeud de connexion de la cellule, pour communiquer l'information représentée par ladite impulsion d'activation aux noeuds de cellules présélectionnées voisines du réseau, sous la forme de courants temporaires traversant les éléments de liaison entre ces cellules et prélevés sur le courant injecté.

Ainsi, on peut conférer à l'information à diffuser, non seulement un aspect quantitatif par l'intensité du courant injecté, mais également un aspect temporel, ce dernier étant représenté, soit par la durée de l'impulsion de commande, soit encore plus avantageusement, par la fréquence des impulsions de commande appliquées à une cellule considérée. Dans ce dernier cas, l'information fournie par une cellule donnée peut être formée par une accumulation des informations élémentaires fournies respectivement à chaque apparition quelque part dans le réseau d'une impulsion de commande capable de provoquer l'excitation de la cellule considérée.

Le document EP 0 517 097 décrit un réseau ayant des cellules dont les noeuds de connexion peuvent recevoir différents potentiels sous l'action d'un signal de sélection collectif qui agit sur la totalité d'une rangée de cellules. Ce signal de sélection permet d'activer dans chaque cellule des amplificateurs opérationnels autorisant l'application des potentiels à un autre amplificateur opérationnel dont la sortie est reliée au noeud de connexion de la cellule. Dans ce montage connu, aucun élément interrupteur n'est prévu pour permettre l'injection sélective sur le plan spatiale d'un courant dans le noeud de connexion de chaque cellule et encore moins une telle injection qui soit sélective sur le plan temporel.

D'autres caractéristiques et avantages de l'invention apparaîtront au cours de la description qui va suivre, donnée uniquement à titre d'exemple et faite en se référant aux dessins annexés sur lesquels:
- la figure 1 est un schéma fonctionnel d'une cellule pour un réseau bidimensionnel de diffusion pseudo-axonique, conçu selon l'invention;
- la figure 2 est le schéma d'un exemple de réalisation concret d'une cellule de réseau selon la figure 1;
- la figure 3 est un schéma de quelques cellules d'un réseau bidimensionnel selon l'invention, composé de cellules telles que celles représentées sur les figures 1 et 2;
- la figure 4 représente très symboliquement une partie d'un réseau, du type hexagonal de grandes dimensions, construit selon l'invention, à partir du schéma de base représentée sur la figure 3;
- la figure 5 représente le schéma d'un réseau unidimensionnel utilisant des cellules simplifiées selon l'invention;
- la figure 6 représente le schéma d'un réseau unidimensionnel et unidirectionnel utilisant également des cellules simplifiées selon l'invention;
- la figure 7A montre le schéma d'un exemple de réalisation concret d'une cellule utilisée dans le réseau de la figure 6;
- la figure 7B montre le schéma concret d'un exemple de cellule pour un réseau hexagonal du type des figures 2 et 3 et comportant des moyens pour permettre le blocage de la diffusion dans une direction de diffusion donnée;
- la figure 8 représente symboliquement le schéma très simplifié d'un système de diffusion réalisé à l'aide de réseaux de cellules conçus selon l'invention; et
- les figures 9A à 9E montrent, à titre d'exemple, plusieurs illustrations du fonctionnement d'une partie d'un réseau bidimensionnel suivant l'invention.

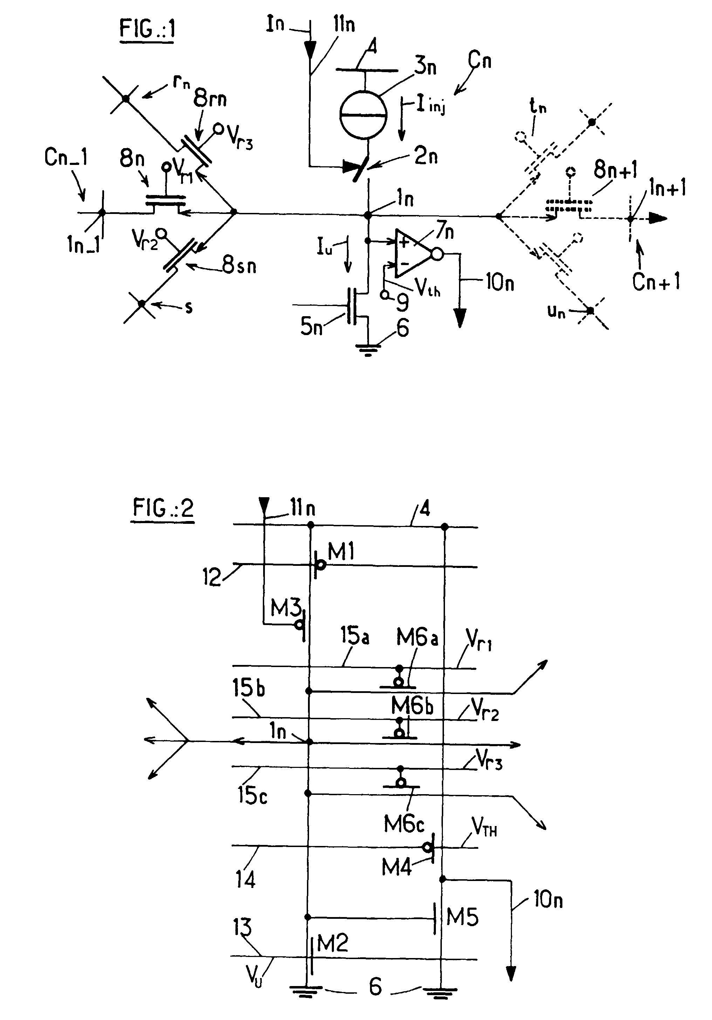

Sur la figure 1, on a représenté le mode de réalisation préféré d'une cellule Cn pour un réseau selon l'invention. La cellule Cn définit un noeud 1n auquel sont connectés:
- un interrupteur 2n relié par ailleurs à travers une source de courant 3n à une ligne 4 raccordée à une source d'alimentation (non représentée);
- un transistor 5n relié à la masse 6 qui est l'autre pôle de la source d'alimentation, ce transistor étant un élément consommateur qui assure la polarisation du noeud 1n;
- l'entrée non-inverseuse d'un comparateur 7n; et
- les bornes respectives de trois éléments de liaison 8n, 8rn et 8sn, de type RG, (résistance/conductance) appartenant respectivement à la cellule n considérée et destinés à être connectés à des cellules voisines du réseau. Par exemple, l'élément RG 8n est connecté au noeud 1n-1 de la cellule Cn-1.

L'entrée inverseuse du comparateur 7n est reliée à une source 9 délivrant une tension de seuil Vth.

Les éléments RG 8n, 8rn et 8sn peuvent être de simples résistances ohmiques, mais, comme représenté, ils sont formés, de préférence, par des transistors MOS permettant d'engendrer des bulles non circulaires dans le réseau. En effet, les tensions Vr1, Vr2 et Vr3 appliquées respectivement sur les grilles des transistors MOS 8n, 8rn et 8sn peuvent être différentes les unes des autres. Ainsi, on peut choisir la direction de propagation des courants selon les trois directions possibles définies par le réseau.

Le comparateur 7n délivre un signal sur la sortie 10n de la cellule en fonction du résultat de la comparaison entre la tension de seuil Vth et le potentiel du noeud 1n. Comme on le verra par la suite, cette sortie peut être connectée à une ou plusieurs autres cellules du réseau constituant avec la cellule Cn un arbre pseudo-axonique, par exemple. Cependant, elle peut également être reliée à un circuit d'utilisation (non représenté), tel qu'un dispositif d'accumulation de charges, un compteur d'impulsions ou encore un convertisseur fréquence/tension ou courant délivrant un signal utile qui est représentatif du comportement temporel de la cellule en question.

Sur la figure 1, le schéma dessiné en traits gras représente une cellule destinée à faire partie d'un réseau bidimensionnel. Toutefois, un réseau moins complexe unidimensionnel peut être composé avec les mêmes cellules en omettant les connexions vers les cellules 8rn et 8sn.

Comme on l'a déjà constaté, des configurations bidimensionnelles peuvent former des groupes de cellules que l'on peut s'imaginer constituer des couches, connectées à des couches voisines par l'intermédiaire de connexions entre les sorties et les noeuds des cellules. Toutefois, on comprendra que la notion de "couche" ne doive pas être comprise comme si les cellules étaient réellement disposées dans des couches physiquement superposées, seules les connexions électriques entre les noeuds des cellules et les sorties de celles-ci pouvant traduire cette notion. En réalité, un réseau complexe à plusieurs couches pourra donc physiquement être plan et être réalisé sous la forme d'une seule ou de plusieurs puces de circuit intégré, par exemple.

Comme on peut le constater à l'examen de la figure 1, selon une caractéristique importante de l'invention, le noeud 1n de la cellule Cn est connecté à la source de courant 3n à travers l'interrupteur 2n, ce dernier étant commandé par l'intermédiaire d'une ligne de commande lln à laquelle peut être appliqué un signal d'activation In de la cellule sous la forme d'une impulsion de courant ou de plusieurs impulsions de courant successives en fonction de l'information que l'on veut distribuer dans le réseau. Ce point sera expliqué plus en détail dans la suite de la description.

On va maintenant se référer à la figure 2 qui représente un exemple de réalisation concret d'une cellule selon l'invention.

La cellule comprend un premier circuit série connecté entre la source d'alimentation 4 et la masse 6. Dans ce circuit série sont insérés trois transistors M1, M2 et M3. Le transistor M1 forme la source de courant 3n. Sa tension de grille lui est appliquée par une ligne de commande 12. Le transistor M2 détermine le potentiel du noeud 1n, une tension Vu étant appliquée à cet effet à sa grille à travers une ligne de commande 13. Le transistor M3 constitue l'interrupteur 2n, sa grille étant connectée à la ligne de commande 11n.

La cellule comprend également un second circuit série dans lequel sont insérés les transistors M4 et M5 constituant ensemble le comparateur 7n. La sortie 10n de la cellule est prélevée sur le noeud entre ces deux transistors. La tension de seuil Vth est appliquée à la grille du transistor M4 par l'intermédiaire d'une ligne 14. La grille du transistor M5 est connectée au noeud 1n.

Les éléments 8n, 8rn et 8sn sont formés par des transistors respectifs M6a, M6b et M6c dont les circuits source-drain sont insérés entre le noeud 1n de la cellule considérée et les transistors équivalents de trois cellules voisines. Les grilles de ces transistors M6a, M6b et M6c sont raccordées à des lignes de commande respectives 15a, 15b et 15c sur lesquelles sont appliquées les tensions de commande Vr1, Vr2 et Vr3 dont le rôle apparaîtra par la suite.

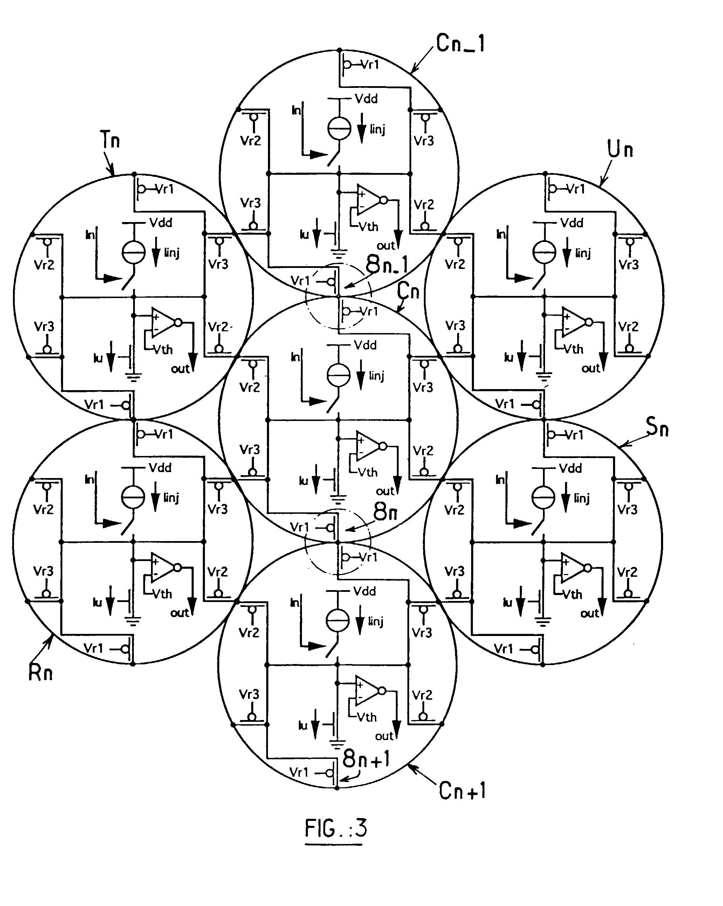

La figure 3 représente plus en détail une partie d'un réseau de diffusion hexagonal, chaque cellule de ce réseau étant entourée d'un cercle symbolique qui la délimite par rapport aux autres cellules. Ainsi, la figure représente les cellules Cn, Cn-1, Cn+1, Rn, Sn, Tn et Un. Ces cellules sont connectées les unes aux autres par des éléments RG, tels que 8n, 8n-1, 8rn et 8sn par exemple appartenant respectivement à deux cellules contiguës. Dans cette configuration, les cellules sont donc rigoureusement identiques. On remarquera que les tensions de commande appliquées à ces éléments RG sont les mêmes selon les diagonales du réseau. Par exemple, les transistors qui relient entre elles les cellules Cn-1, Cn et Cn+1, les cellules Tn et Rn et les cellules Un et Sn respectivement, sont commandées par la même tension Vr1, tandis que les transistors qui relient entre elles les cellules Un, Cn et Sn, les cellules Cn-1 et Un et les cellules Rn et Cn+1 sont commandés par la tension Vr2 respectivement, etc.

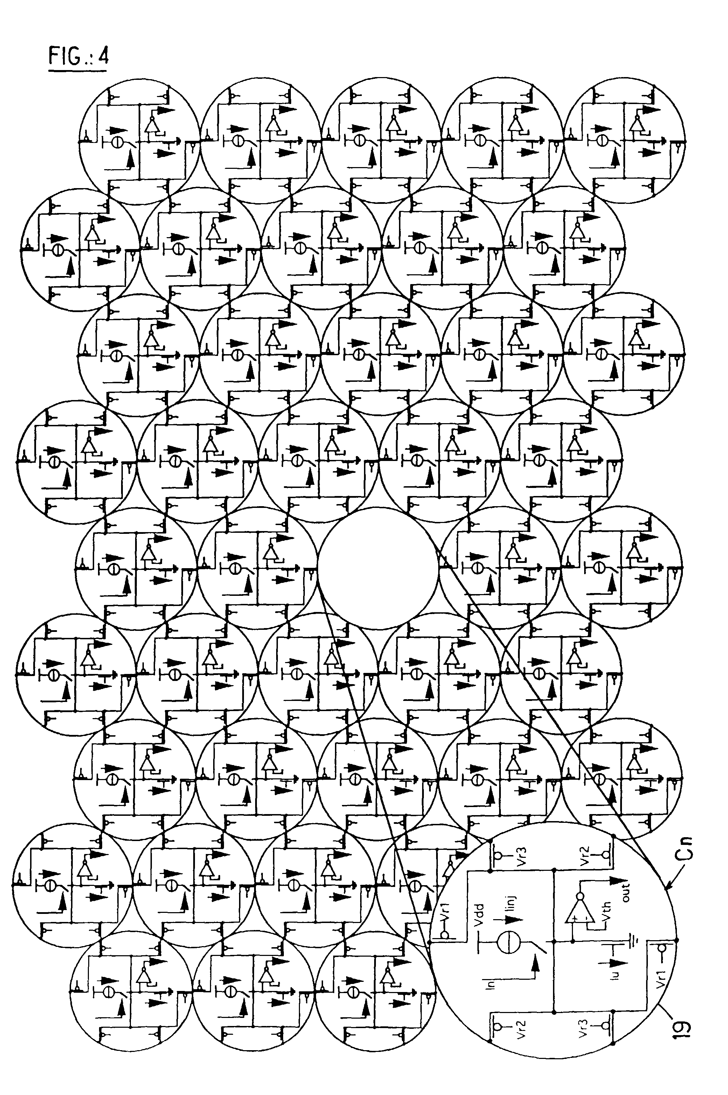

La figure 4 reprend le schéma de la figure 3 en le multipliant pour illustrer la construction d'une partie d'un réseau bidimensionnel hexagonal de très grandes dimensions, seule la cellule Cn étant détaillée à part dans le cercle désigné par 19. Cette partie comprend 45 cellules. En pratique, un tel réseau peut comporter plusieurs milliers de cellules. La disposition hexagonale présente un avantage technologique important en ce qu'elle permet d'obtenir dans une même couche une densité de cellules maximale sans qu'il soit nécessaire de prévoir des croisements des interconnexions des cellules.

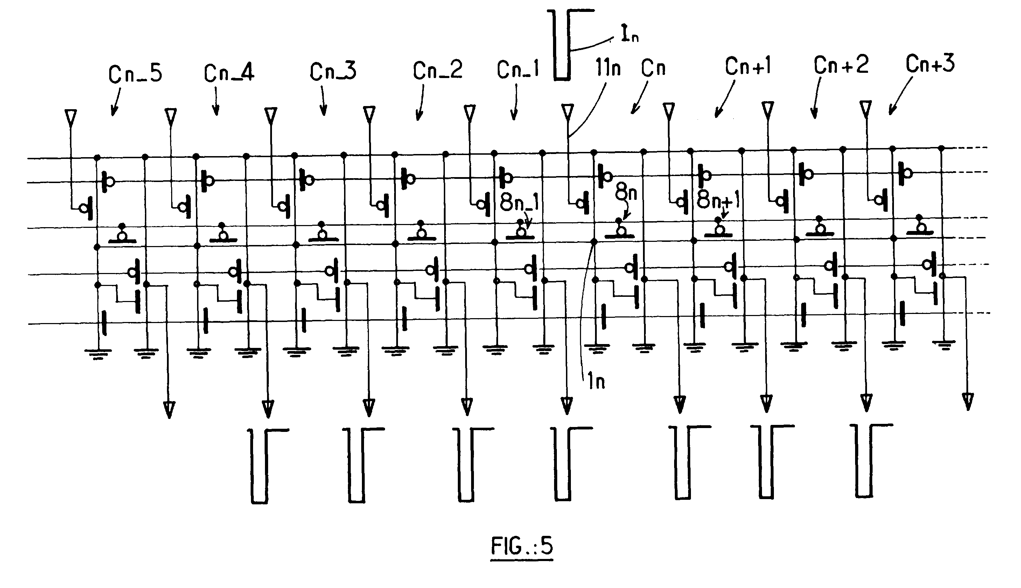

La figure 5 montre un réseau de diffusion unidimensionnel conforme à l'invention et réalisé à l'aide de cellules telle que celle représentée sur les figures 1 et 2 à ceci près qu'elles sont simplifiées en ne comportant qu'un seul élément RG menant à la cellule voisine et bien entendu de ce fait qu'une seule ligne de commande pour l'application la tension de commande.

Cette figure 5 montre neuf cellules référencées Cn-5 à Cn+3, la cellule Cn étant supposée recevoir une impulsion de commande In sur sa ligne de commande 11n.

On voit que le rapport des courants Iinj et Iu (voir figure 1) circulant de part et d'autre du noeud 1n détermine en premier lieu le nombre de cellules qui seront activées de chaque côté de la cellule Cn recevant l'impulsion d'activation In. En d'autres termes, ce rapport détermine le nombre de cellules dans lesquelles le courant injecté dans le noeud 1n pourra engendrer un potentiel suffisant pour déclencher le comparateur d'une cellule. Dans le cas représenté, on a supposé que ce rapport est égal à sept, puisque, comme on peut le voir sur la figure 5, les cellules Cn-4 à Cn+2 produisent une impulsion à leur sortie. On considère alors ici que la "bulle" sur laquelle diffuse l'information représentée par l'impulsion appliquée sur la cellule Cn, a une étendue de sept cellules. Comme cette étendue dépend du rapport de courant Iinj/Iu, on peut remarquer qu'elle est déterminée en réalité et en premier lieu par le rapport des tensions appliquées respectivement sur les lignes 12 et 14 (voir figure 2).

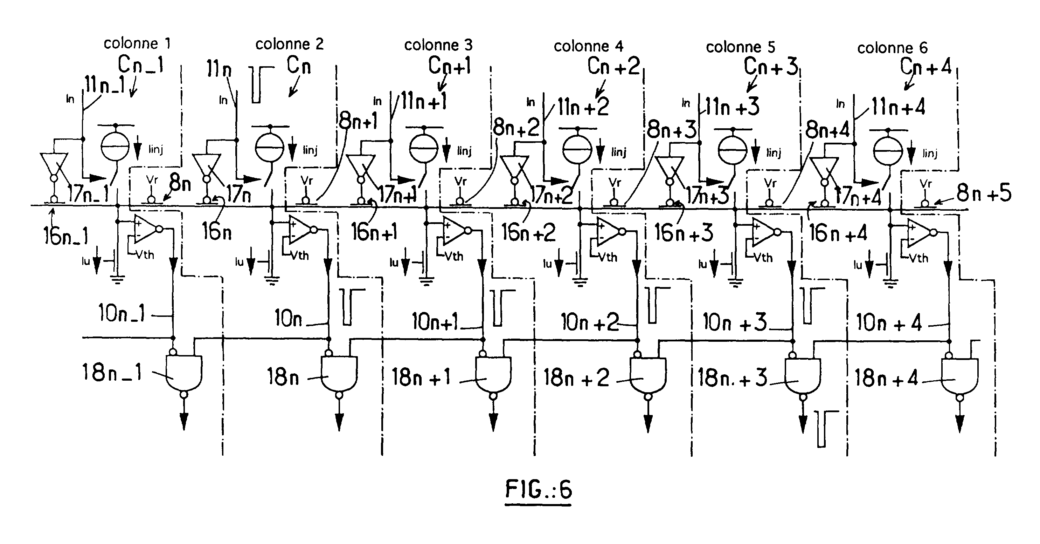

La figure 6 représente un réseau unidimensionnel composé de cellules simplifiées selon l'invention, ce réseau étant doté en outre de moyens pour déterminer le sens de la propagation de l'information dans le réseau. En d'autres termes, ce réseau peut, au choix, être rendu unidirectionnel dans chaque sens en termes de propagation de l'information.

A cet effet un élément interrupteur ....16n-1, 16n, 16n+1 formé de préférence par un transistor de commutation, est inséré en série avec l'élément RG ....8n-1, 8n, 8n+1.... de chaque cellule. La grille de commande de cet élément interrupteur est connectée à la ligne ....11n-1, 11n, 11n+1.... de la cellule correspondante par l'intermédiaire d'un inverseur ....17n-1, 17n, 17n+1.... .

Par conséquent, dès qu'une cellule, par exemple la cellule Cn de la figure 6, reçoit une impulsion de courant sur sa ligne 11n, son élément interrupteur 16n est également commandé en bloquant le réseau de ce côté (vers la gauche sur la figure 6). L'impulsion de courant ne peut alors se propager que dans un seul sens (vers la droite sur la figure 6).

Le degré de décalage de l'information dans le réseau (le nombre de cellules affectées en même temps par l'impulsion de commande ou d'activation) est ici également déterminé par le rapport entre les courants Iinj et Iu de la cellule recevant l'impulsion de commande. Dans l'exemple représenté, le rapport est de quatre de sorte que le décalage est de 4-1=3, la cellule Cn+3 étant donc la dernière à être affectée par l'impulsion de commande. En d'autres termes, la "bulle" s'étend sur quatre cellules. En pratique, le réseau comportera un nombre de cellules bien plus grand. Ainsi, si, à titre d'exemple, ce réseau comporte 100 cellules, si les comparateurs 7n des cellules basculent pour une tension du noeud 1n correspondant à un courant Iu de 2 nA et si le courant injecté dans le noeud de la cellule recevant l'impulsion de commande est de 100 nA, la "bulle" s'étendra sur cinquante cellules du réseau.

La figure 6 met en évidence une autre caractéristique avantageuse selon l'invention qui consiste en la possibilité de ne faire apparaître un signal à la sortie que de la dernière cellule qui doit être activée pour la diffusion de l'information.

A cet effet, chaque cellule est équipée d'une porte NON-ET ....18n-1, 18n, 18n+1 dont l'une des entrées est connectée à la sortie 10n-1, 10n, 10n+1....de la cellule correspondante et à l'autre entrée de la porte NON-ET de la cellule précédente.

Ainsi, un signal n'apparaît à la sortie d'une cellule que si elle est elle-même activée, en même temps que la cellule précédente. Ceci revient à ce qu'un seul signal apparaît en sortie du réseau (en l'occurrence à la sortie de la cellule Cn+3).

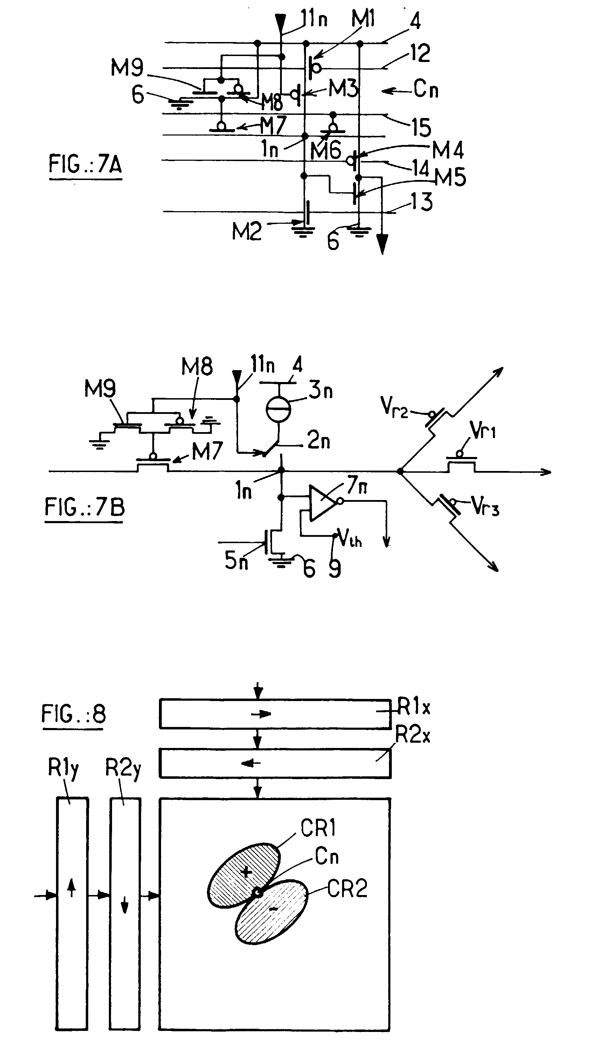

La figure 7A montre un exemple de réalisation concret d'une cellule simplifiée utilisée dans le réseau selon la figure 6, le schéma de la porte NON-ET 18n n'y étant pas représentée. Cette cellule n'est pourvue que d'un seul transistor M6 formant élément RS, étant donné qu'elle est destinée à faire partie d'un réseau unidimensionnel. On voit que le transistor de commutation 16n et l'inverseur 17n de la figure 6 sont réalisés à l'aide des transistors respectifs M7, M8 et M9.

La figure 7B montre un schéma analogue pour une cellule destinée à un réseau bidimensionnel avec possibilité de bloquer la diffusion de l'information dans une direction de diffusion donnée.

La figure 8 représente symboliquement un exemple d'application d'une combinaison de réseaux unidimensionnels unidirectionnel d'une part et de réseaux bidirectionnels d'autre part, qui viennent d'être décrits ci-dessus. Il s'agit d'un système de diffusion comprenant deux réseaux R1x et R2x pour la direction X et deux réseaux R1y, R2y pour la direction Y, respectivement, ces réseaux étant construits selon le schéma de la figure 6. En outre, le système comporte deux réseaux bidimensionnels CR1 et CR2 selon les figures 3 et 4.

Ce système peut comporter un très grand nombre de cellules, par exemple plusieurs milliers pour fixer les idées. L'ensemble représenté constitue ainsi un système de diffusion permettant d'engendrer des champs récepteurs en fonction de l'activation des cellules dans chaque réseau bidimensionnel, l'un pouvant être excitateur et l'autre inhibiteur. Les quatre réseaux unidimensionnels R1x, R2x, R1y et R2y sont capables d'engendrer un décalage entre la position d'une cellule cible Cn et le centre de la partie excitatrice ou inhibitrice du champ récepteur.

Ainsi, le système de la figure 8 est capable d'engendrer des champs récepteurs comparables à ceux des cellules du cortex visuel parmi lesquelles les cellules simples, les cellules complexes et hypercomplexes et les cellules de contours.

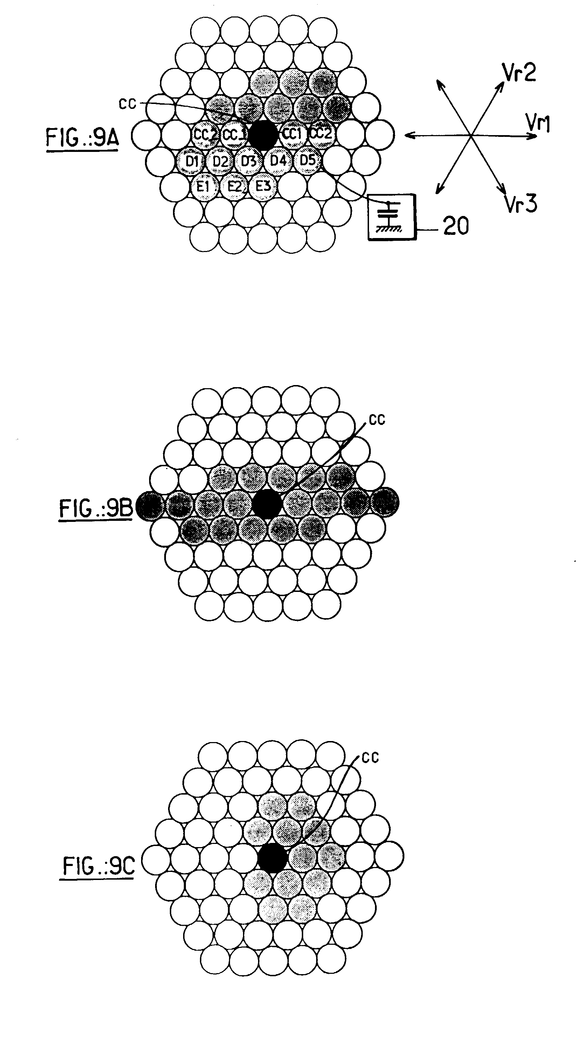

Les figures 9A à 9E illustrent le fonctionnement d'un réseau de diffusion bidimensionnel du type décrit à propos des figures 3 et 4 et mettant en oeuvre les caractéristiques de l'invention.

Sur ces figures qui ne représentent qu'une petite portion d'un tel réseau, chaque cellule est représentée par un cercle. En outre, sur la figure 9A, on a indiqué par des vecteurs de tension Vr1, Vr2 et Vr3, les directions dans lesquelles agissent ces tensions dans le réseau en activant les transistors de 'communication avec les cellules voisines.

Enfin, sur chacune de ces figures, il est supposée qu'à l'instant considéré, une cellule d'injection CC du réseau est activée par une impulsion de courant. Bien entendu, cette cellule peut (ou peut ne pas) être différente à chaque impulsion d'activation en fonction de l'endroit où cette impulsion est appliquée au réseau.

Ceci étant, sur la figure 9A, le rapport Iinj/Ii appliquée à la cellule d'injection CC est par exemple égale à 21, valeur qui n'est ici choisie qu'à titre d'exemple. Par ailleurs, les tensions Vr1 et Vr2 sont choisies de valeurs égales, tandis que la tension Vr3 est égale à zéro. Ainsi, l'impulsion de courant se répand dans le réseau à partir de la cellule d'injection et active toutes les celulles alentour pour lesquelles les tensions de commande ont autorisé la communication avec les cellules voisines respectives et pour lesquelles en même temps le courant correspondant à la ou les part (s) de l'impulsion d'activation qui leur revien(nen)t, est (sont) suffisante (s) pour provoquer le déclenchement de leur comparateur 7n. Il en résulte que la forme de la "bulle" (la configuration de toutes les cellules activées dans ce réseau bidimensionnel) peut être déterminée à volonté en choississant ces paramètres en conséquence.

Ainsi par exemple, sur la figure 9A, la cellule CC1 est activée par la tension Vr1 en prélevant sa part de l'impulsion de courant qui lui parvient directement de la cellule d'injection CC. La cellule D4 par exemple est activée par des parts de courant qui lui parviennent des cellules voisines en raison de la présence des tensions Vrl et Vr2 à la fois.

Sur la figure 9B, on suppose que le rapport de courant Iinj/Ii=19, que Vr1=k∗Vr2 avec k>1 et que Vr3=0. Dans ces conditions, à l'apparition de l'impulsion d'activation, la "bulle" prend une forme sensiblement allongée en s'étendant de part et d'autre de la cellule d'activation CC.

Sur la figure 9C, Iinj/Ii=13 et Vrl=Vr2=Vr3. Par ailleurs, ce réseau est supposé être construit selon le concept illustré sur la figure 7B. De la sorte, les cellules du réseau se trouvant à gauche de la cellule d'injection CC (comme vu sur la figure 9C) sont coupées et ne reçoivent aucune part de courant.

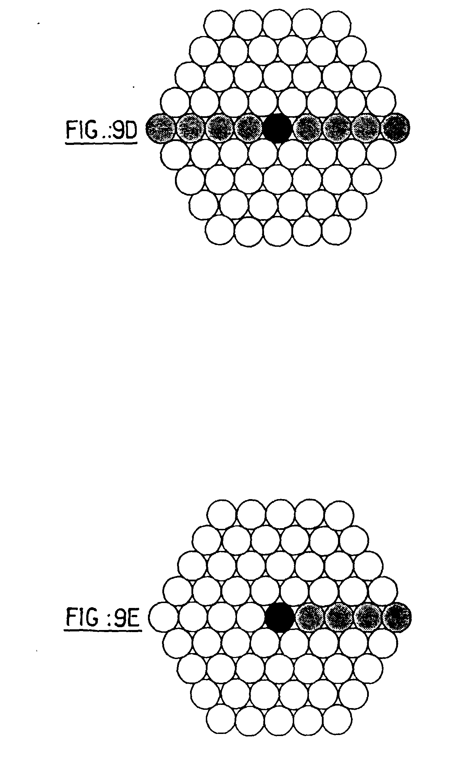

Sur la figure 9D, Iinj/Ii=9, Vr1≠0 et Vr2=Vr3=0. Dans ces conditions, la "bulle" a une forme correspondant à une rangée de cellules du réseau.

Enfin, sur la figure 9E, Iinj/Ii=5, Vr1≠0 et Vr2=Vr3=0, tandis qu'ici également le réseau est conçu selon la figure 7B, la branche gauche de la cellule d'injection CC étant coupée.

Ces quelques exemples montrent clairement que la forme et la taille des "bulles" peuvent être déterminées à chaque activation par une impulsion de courant, en choississant pour l'intensité de cette dernière une valeur donnée, comme pour chacune des tensions Vr1, Vr2 et Vr3 autorisant la communication entre les cellules.

Il est à noter que chaque sortie 10n d'une cellule peut être connectée à un circuit d'exploitation déjà mentionné ci-dessus, tel qu'un dispositif d'accumulation de charges du type condensateur par exemple, schématisé en 20 sur la figure 9A pour ce qui concerne l'une D5 des cellules du réseau.

La quantité de charges stockée dans ces dispositifs d'accumulation de charges peut ainsi correspondre au nombre d'excitations successives de ces cellules par le train d'impulsions d'activation successives appliqué aux cellules d'injection du réseau. La donnée fournie par chacune des cellules aura donc un "poids" d'autant plus important que le nombre de fois que les impulsions de courant parvenant à l'activer sera plus grand.

En d'autres termes, il est possible d'affecter à chaque cellule un taux d'activité a défini comme étant k^{∗}f, k étant un facteur de proportionnalité et f la fréquence d'activation de chaque cellule, étant supposé que les impulsions d'activation soient engendrées à des intervalles réguliers et que la durée des impulsions soit très courte par rapport à la période du signal impulsionnel. Si le réseau comporte plusieurs couches de cellules, on peut alors considérer pour ce qui est des cellules dans une couche donnée excitées par plusieurs cellules d'une couche hiérarchiquement supérieure, que le taux d'activité sera de a=k(f1 + f2).

On conçoit ainsi que moyennant un nombre très réduit de connexions entre différentes couches d'un réseau, les cellules des différentes couches peuvent communiquer entre elles moyennant un choix judicieux des paramètres commandant chaque cellule. Dans ce contexte, il est important de noter que ces paramètres peuvent être appliqués aux cellules par des systèmes matriciels analogues à ceux utilisés habituellement pour les mémoires semi-conductrices. Ainsi, l'invention permet de créer un véritable réseau d'arbres pseudo-axoniques capables de traiter des éléments d'information en les combinant selon des règles dictées par l'application des paramètres de commande des cellules. Plus précisément, grâce aux transistors de connexion entre les cellules (tels que les transistors 8n, 8rn et 8sn de la figure 1), on peut déterminer commodément la distance de diffusion entre les cellules et ainsi former des "bulles" d'information de formes très diverses. D'une façon générale, l'invention permet de programmer les paramètres du champ récepteur dans un réseau de diffusion par la simple détermination des rapports de courant dans chaque cellule de celui-ci.

On notera également que le circuit proposé pour chaque cellule ne comporte, dans sa version la plus simple, que dix transistors de sorte que, grâce à l'invention, une même puce de circuit intégré de taille habituelle peut abriter un réseau comportant un très grand nombre de cellules.

## Revendications

1. Réseau pseudo-axonique de diffusion d'information comprenant une pluralité de cellules (Cn) connectées entre elles pour la transmission de l'information par des éléments de liaison (8n, 8rn, 8sn), de préférence à caractéristique de conduction non linéaire, chaque cellule comportant un noeud de connexion (1n) dont le potentiel est représentatif de l'état excité de ladite cellule et auquel est relié au moins un desdits éléments de liaison (8n, 8rn, 8sn), ledit noeud de connexion (1n) de chaque cellule étant également inséré dans un circuit série comportant une source de courant (3n) et un élément consommateur de courant (5n) pour fixer ledit potentiel, ledit réseau étant caractérisé en ce que chaque cellule (Cn) comporte également un élément interrupteur (2n) entre ladite source de courant (3n) et ledit noeud de connexion (1n), chaque élément interrupteur pouvant être fermé sélectivement par des impulsions d'activation, ainsi qu'un comparateur (7n) pour comparer ledit potentiel du noeud de connexion à une tension de seuil (Vₜₕ), la sortie dudit comparateur formant la sortie de ladite cellule et délivrant une information de sortie représentative du taux d'excitation de cette cellule résultant d'activations d'une ou de plusieurs cellules quelconques dudit réseau.

2. Réseau suivant la revendication 1 réalisé avec des transistors CMOS, caractérisé en ce que ledit élément interrupteur (2n) est un transistor (M3) dont la grille est reliée à une ligne de commande (lln) pour la réception desdites impulsions d'activation.

3. Réseau suivant les revendications 1 et 2, caractérisé en ce que chaque cellule comporte également des moyens de blocage (16n, 17n) montés en série avec ledit élément de liaison (8n, 8rn, 8sn) et connectés à ladite ligne de commande (11n) de telle manière qu'ils bloquent la connexion avec une cellule voisine (Cn-1) simultanément à la fermeture dudit élément interrupteur (2n).

4. Réseau suivant la revendication 3, caractérisé en ce que lesdits moyens de blocage sont formés par un transistor (CMOS) inséré en série avec ledit élément de liaison (8n, 8rn, 8sn) et dont la grille est connectée à ladite ligne de commande (11n).

5. Réseau suivant l'une quelconque des revendications 1 à 4, caractérisé en ce que chaque cellule comporte également une porte logique (18n) raccordée par l'une de ses entrées à la sortie dudit comparateur (7n) et par une autre entrée à la sortie d'une cellule voisine (Cn+1) et dont la sortie constitue la sortie de ladite cellule (Cn).

6. Réseau suivant la revendication 5, caractérisé en ce que la sortie dudit comparateur (7n) est connectée à un circuit d'exploitation (20) destiné à délivrer un signal utile réprésentatif du comportement temporel de la cellule considérée.

7. Réseau suivant la revendication 6, caractérisé en ce que ledit circuit d'exploitation est un dispositif d'accumulation de charges, un compteur ou analogue.

8. Réseau suivant l'une quelconque des revendications 1 à 7, caractérisé en ce qu'il est de type hexagonal, chaque cellule comportant six éléments de liaison (8n, 8rn, 8sn).

9. Réseau suivant la revendication 8, caractérisé en ce que lesdits éléments de liaison (8n, 8rn, 8sn) sont commandés par des tensions de commande (Vr1, Vr2, Vr3) communes selon des diagonales dudit réseau.

10. Réseau suivant l'une quelconque des revendications 4 à 6, caractérisé en ce qu'il comporte des rangées de cellules (R1x, R2x, R1y, R2y) disposées par paires selon des axes perpendiculaires, les rangées correspondant à un même axe comportant des moyens de blocage agissant respectivement dans des sens opposés.

## Patentansprüche

1. Neuronales Informationsdiffusionsnetz mit mehreren Zellen (Cn), die zur Übertragung der Information durch Verbindungselemente (8n, 8rn, 8sn) von vorzugsweise nicht linearer Leitfähigkeit untereinander verbunden sind, wobei jede Zelle einen Knoten (1n) aufweist, dessen Potential den Erregungszustand der Zelle darstellt und mit dem mindestens eines der Verbindungselemente (8n, 8rn, 8sn) verbunden ist, der Knoten (1n) jeder Zelle ferner mit einer Stromquelle (3n) und einem Stromverbrauchselement (5n) zum Festlegen dieses Potentials in Reihe geschaltet ist, welches Netz dadurch gekennzeichnet ist, daß jede Zelle (Cn) ferner aufweist: ein Unterbrecherelement (2n) zwischen der Stromquelle (3n) und dem Knoten (1n), wobei jedes Unterbrecherelement wahlweise durch Aktivierungsimpulse geschlossen werden kann, sowie einen Komparator (7n) zum Vergleichen des Potentials des Knotens mit einer Schwellwertspannung (Vₜₕ), wobei der Ausgang des Komparators den Ausgang der Zelle bildet und eine Ausgangsinformation abgibt, die für das Erregungsverhältnis dieser Zelle repräsentativ ist, das aus der Aktivierung irgendeiner oder mehrerer Zellen dieses Netzes resultiert.

2. Netz nach Anspruch 1, das mit CMOS-Transistoren realisiert ist, dadurch gekennzeichnet, daß das Unterbrecherelement (2n) ein Transistor (M3) ist, dessen Gate mit einer Steuerleitung (11n) für den Empfang der Aktivierungsimpulse verbunden ist.

3. Netz nach den Ansprüchen 1 und 2, dadurch gekennzeichnet, daß jede Zelle ferner Sperrmittel (16n, 17n) aufweist, die mit dem Verbindungselement (8n, 8rn, 8sn) in Reihe geschaltet und mit der Steuerleitung (11n) so verbunden sind, daß sie gleichzeitig mit dem Schließen des Unterbrecherelements (2n) die Verbindung mit einer benachbarten Zelle (Cn-1) sperren.

4. Netz nach Anspruch 3, dadurch gekennzeichnet, daß die Sperrmittel von einem Transistor (CMOS) gebildet werden, der mit dem Verbindungselement (8n, 8rn, 8sn) in Reihe geschaltet ist und dessen Gate mit der Steuerleitung (11n) verbunden ist.

5. Netz nach einem der Ansprüche 1 bis 4, dadurch gekennzeichnet, daß jede Zelle ferner ein Logikgatter (18n) aufweist, das mit einem seiner Eingänge an dem Ausgang des Komparators (7n) und mit einem anderen Eingang am Ausgang einer benachbarten Zelle (Cn+1) angeschlossen ist und dessen Ausgang den Ausgang dieser Zelle (Cn) bildet.

6. Netz nach Anspruch 5, dadurch gekennzeichnet, daß der Ausgang des Komparators (7n) mit einer Auswerteschaltung (20) verbunden ist, die zur Abgabe eines Benutzersignals dient, das das Zeitverhalten der betrachteten Zelle darstellt.

7. Netz nach Anspruch 6, dadurch gekennzeichnet, daß die Auswerteschaltung eine Vorrichtung zum Speichern von Ladungen, ein Zähler oder dergleichen ist.

8. Netz nach einem der Ansprüche 1 bis 7, dadurch gekennzeichnet, daß es von hexagonaler Bauart ist, wobei jede Zelle sechs Verbindungselemente (8n, 8rn, 8sn) aufweist.

9. Netz nach Anspruch 8, dadurch gekennzeichnet, daß die Verbindungselemente (8n, 8rn, 8sn) durch gemeinsame Steuerspannungen (Vr1, Vr2, Vr3) auf den Diagonalen des Netzes gesteuert werden.

10. Netz nach einem der Ansprüche 4 bis 6, dadurch gekennzeichnet, daß es Zellenreihen (R1x, R2x, R1y, R2y) aufweist, die paarweise auf senkrechten Achsen angeordnet sind, wobei die derselben Achse entsprechenden Reihen Sperrmittel aufweisen, die jeweils in entgegengesetztem Sinn wirken.

## Claims

1. A pseudo-axonal network for information diffusion comprising a plurality of cells (Cn) connected together for the transmission of information via linking elements (8n, 8rn, 8sn), preferably having a nonlinear conduction characteristic, each cell including a connection node (1n) whose potential is representative of the excited state of said cell and to which is linked at least one of said linking elements (8n, 8rn, 8sn), said connection node (1n) also being inserted into a series circuit which includes a current source (3n) and a current consuming element (5n) so as to fix said potential, said network being characterized in that each cell (Cn) also comprises a switch element (2n) between said current source (3n) and said connection node (1n), each switching element having selective closure by activation pulses, and a comparator (7n) for comparing said potential of the connection node with a threshold voltage (Vₜₕ), the output of said comparator delivering the output information from said cell and supplying an output information representing the excitation rate of that cell resulting from activations of any cell or any plurality of cells of said network.

2. The network as claimed in claim 1 embodied with CMOS transistors, characterized in that said switch element (2n) is a transistor (M3) whose gate is linked to a control line (11n) for receiving said activation pulses.

3. The network as claimed in claims 1 and 2, wherein each cell also includes blocking means (16n, 17n) mounted in series with said linking element (8n, 8rn, 8sn) and connected to said control line (11n) in such a way that they block the connection with a neighboring cell (Cn-1) simultaneously with the closure of said switch element (2n).

4. The network as claimed in claim 3, characterized in that said blocking means are formed by a transistor (CMOS) inserted in series with said linking element (8n, 8rn, 8sn) and whose gate is connected to said control line (11n).

5. The network as claimed in any one of claims 3 to 5, characterized in that each cell also includes a logic gate (18n) joined by one of its inputs to the output of said comparator (7n) and by another input to the output of a neighboring cell (Cn+1) and whose output constitutes the output of said cell (Cn).

6. The network as claimed in claim 5, characterized in that the output (10n) of said comparator (7n) is joined to an exploitation circuit (20) intended to yield a useful signal which is dependent on the time behaviour of the cell (Cn) under consideration.

7. The network as claimed in claim 6, characterized in that said exploitation circuit is a charge accumulation device, a counter or the like.

8. The network as claimed in any one of claims 1 to 7, characterized in that it is of the hexagonal type, each cell comprising six linking elements (8n, 8rn, 8sn).

9. The network as claimed in claim 8, characterized in that said linking elements (8n, 8rn, 8sn) are controlled by control voltages (Vr1, Vr2, Vr3) which are common along the diagonals of said network.

10. The network as claimed in either of claims 4-6 characterized in that it includes rows of cells (R1x, R2x, R1y, R2y) arranged in pairs along perpendicular axes, the rows corresponding to one and the same axis including blocking means acting respectively in opposite directions.
